# EUROPEAN PATENT APPLICATION

(11) **EP 2 903 118 A1**
(43) Date of publication of application: **05.08.2015**
(21) Application number: 14153235.8
(22) Date of filing: 30.01.2014
(51) Int. Cl.: H02J 3/38

(54) **Method and a controller arrangement for power supply control**

(71) Applicant: ABB Technology Ltd, 8050 Zürich (CH)
(72) Inventor: Sao, Khun-Hti Charles, 723 40 VÄSTERÅS (SE); Baeza, Tomas, 724 62 Västerås (SE)
(74) Representative: Savela, Reino Aleksi

(57) **Abstract**

A method of maintaining a balanced filter bus voltage on a filter bus that is fed by at least two voltage source converters connected to the filter bus via a respective inductor. The method comprises regulating a negative sequence voltage on the filter bus by drooping each filter bus negative sequence voltage reference vector component against the corresponding orthogonal negative sequence current vector component. By balancing the load(s) on the filter bus, load sharing among the voltage source converters may be achieved by means of existing methods even in the presence of unbalanced loads. A controller arrangement is furthermore presented herein.

## Description

### TECHNICAL FIELD

The present disclosure generally relates to voltage source converter control. In particular, it relates to a method and to a controller arrangement for controlling a filter bus voltage by means of voltage source converters connected to the filter bus via inductors.

### BACKGROUND

Parallel operation of voltage source converters connected to a common filter bus may be utilised to share a load connected to the filter bus. An example of the use of several voltage source converters in this manner is centralized frequency conversion shore to ship power supply, in which the load may be one or several ships connected to the filter bus via a feeder cable and a transformer.

An advantage of paralleling a plurality of power supply units for feeding electric power to a load is that an increased power rating can be met by using a plurality of lower power provision rating power supply units connected in parallel to a filter bus instead of using one single high power provision rating power supply unit. This means that maintenance of one such electric power supply unit may be carried out without having to completely shut down the supply of electric power to a load, since the other electric power supply units may then temporarily take over the part of the load from the unit stopped for maintenance. The redundancy obtained by paralleling several power supply units also increases the availability of electric power to the load, since electric power may be fed thereto as long as a sufficient number of power supply units are in operation.

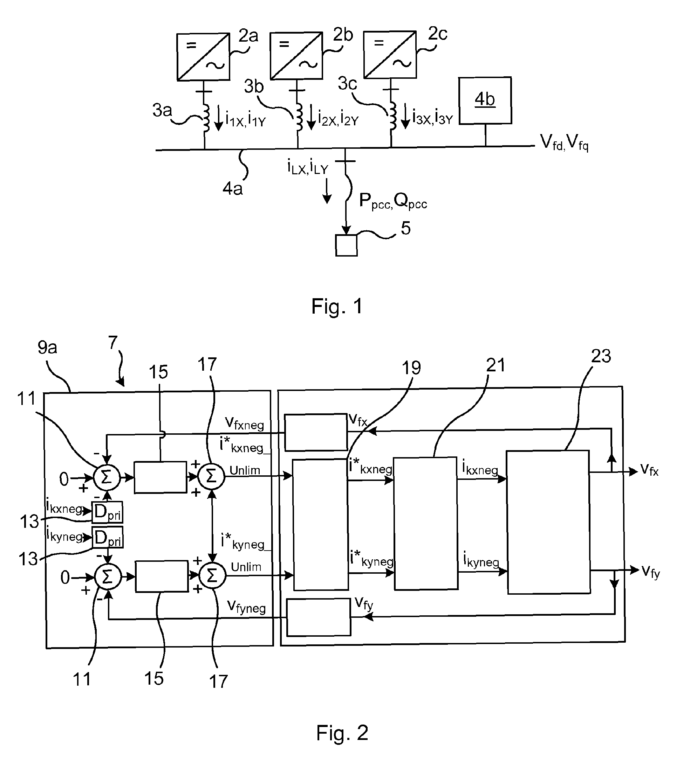

Fig. 1 schematically illustrates an example of a power provision system 1 comprising three voltage source converters 2a-2c connected in parallel to a filter bus 4a equipped 4b with a filter through a respective inductor 3a-3c to share a common load 5 connected to the filter bus. One way to make these converters share the common load is to use an individual controller for each converter.

The use of frequency versus real power and voltage versus reactive power droop schemes for load sharing of independently controlled generators and voltage source converters is well known. However, the converters connected in parallel to a common filter bus through interface inductors and employing such droop schemes operate as voltage sources. Even if they actively regulate the filter bus voltage, they do not have underlying current control loops that regulate and limit their output currents dynamically.

In order to achieve dynamic current control and current limiting capability each converter in Fig 1 must employ a voltage vector control, e.g. a d-q frame or a α-β frame voltage control, with an underlying current controller. This is to regulate the filter bus voltage vector while maintaining dynamic control of the converter current. An example of a control unit and corresponding control scheme utilising a d-q frame is disclosed in EP2549616. This control unit comprises first means configured to produce two orthogonal filter bus voltage vector components v_{fx}, v_{fy} from the filter bus voltage v_{f}, second means configured to produce a filter bus voltage reference vector components v*_{fx} and v*_{fy} for each of the two filter bus voltage vector components, third means configured to obtain the difference between each filter bus voltage vector component, the filter bus voltage reference vector component associated therewith and a scaled current vector component. A regulator is arranged to receive the result of the summing of the third means so as to produce a current reference vector for each filter bus voltage vector, and fourth means configured to involve current control in the control of the converter based on the current reference vectors for obtaining two vectors of the current. The control scheme of EP2549616 however only works in case the load(s) on the filter bus is/are balanced.

### SUMMARY

An object of the present disclosure is to provide a method and a controller arrangement able to maintain a balanced filter bus voltage on a filter bus by means of voltage source converters even in the presence of an unbalanced load.

Hence, according to a first aspect of the present disclosure there is provided a method of maintaining a balanced filter bus voltage on a filter bus that is fed by at least two voltage source converters connected to the filter bus via respective inductors, wherein the method comprises:
a) obtaining orthogonal negative sequence filter bus voltage vector components which provide a measure of a negative sequence voltage present on the filter bus,
b) obtaining for each orthogonal negative sequence filter bus voltage vector component a regulator input signal which is a difference between the orthogonal negative sequence filter bus voltage vector component, a filter bus negative sequence voltage reference vector component that is zero, and a scaled orthogonal negative sequence current vector component corresponding to the orthogonal negative sequence filter bus voltage vector component for which the regulator input signal is to be obtained, wherein the scaling is by means of a droop coefficient,
c) generating for each orthogonal negative sequence filter bus voltage vector component a negative sequence current reference vector component based on the corresponding regulator input signal, and
d) providing the negative sequence current reference vector components to a negative sequence current reference limiter to obtain limited magnitude negative sequence current reference vector components for controlling a first of the at least two voltage source converters to obtain a balanced filter bus voltage.

By maintaining a balanced filter bus voltage even when an unbalanced load condition is present, load sharing control may be provided essentially at all times utilising known control schemes for controlling the overall magnitude and frequency of the filter bus voltage. In particular, by means of the droop coefficient multiplied with the orthogonal negative sequence current vector component utilised in step b) a number of parallel connected voltage source converters may be able to cooperate/get along in order to jointly maintain the balanced filter bus voltage on the filter bus.

According to one embodiment in step c) generation of the negative sequence current reference vector components is further based on a feed forward signal representing a load current.

According to one embodiment the orthogonal negative sequence filter bus voltage vector components are Dqo transformation components.

According to one embodiment each scaled orthogonal negative sequence current vector component is a scaled Dqo transformation component.

One embodiment comprises controlling a positive sequence voltage on the filter bus when the balanced filter bus voltage has been attained to obtain equitable load sharing.

One embodiment comprises controlling an overall voltage magnitude on the filter bus when the balanced filter bus voltage has been attained to obtain equitable load sharing

According to one embodiment each step a) to d) is performed independently in each of a plurality of controller arrangements, each controller arrangement being associated with a respective voltage source converter.

According to one embodiment the droop coefficient is identical for each corresponding orthogonal negative sequence current vector component of the controller arrangements.

According to a second aspect of the present disclosure there is provided a computer program comprising computer-executable components which when run on a processor is arranged to perform the steps according to the method of the first aspect presented herein.

According to a third aspect of the present disclosure there is provided a controller arrangement for maintaining a balanced filter bus voltage on a filter bus that is fed by at least two voltage source converters connected to the filter bus via a respective inductor, wherein the controller arrangement comprises: a negative sequence voltage controller arranged to: obtain orthogonal negative sequence filter bus voltage vector components which provide a measure of negative sequence voltages present on the filter bus, obtain for each orthogonal negative sequence filter bus voltage vector component a regulator input signal which is a difference between the orthogonal negative sequence filter bus voltage vector component, a filter bus negative sequence voltage reference vector component that is zero, and a scaled orthogonal negative sequence current vector component corresponding to the orthogonal negative sequence filter bus voltage vector component for which the regulator input signal is to be obtained, wherein the scaling is by means of a droop coefficient, generate for each orthogonal negative sequence filter bus voltage vector component a negative sequence current reference vector component based on the corresponding regulator input signal, and provide the negative sequence current reference vector components to a negative sequence current reference limiter to obtain limited magnitude negative sequence current reference vector components for controlling a first of the at least two voltage source converters to obtain a balanced filter bus condition.

According to one embodiment the negative sequence voltage controller is arranged to generate the negative sequence current reference vector components further based on a feed forward signal representing a load current.

According to one embodiment the orthogonal negative sequence filter bus voltage vector components are Dqo transformation components.

According to one embodiment each scaled orthogonal negative sequence current vector component is a scaled Dqo transformation component.

One embodiment comprises a positive sequence voltage controller arranged to control a positive sequence voltage on the filter bus when the filter bus is subjected to a balanced load condition to obtain equitable load sharing.

One embodiment comprises a voltage magnitude controller arranged to control an overall voltage magnitude on the filter bus when the filter bus is subjected to a balanced load condition to obtain equitable load sharing

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically depicts an example of a power system comprising voltage source converters connected to a filter bus via respective inductors;
Fig. 2 depicts an example of a control scheme for maintaining a balanced filter bus voltage on a filter bus that is fed by at least two voltage source converters;
Fig. 3 is a flowchart of a method of maintaining a balanced filter bus voltage on a filter bus that is fed by at least two voltage source converters; and
Fig. 4 depicts one example of a control scheme for controlling load sharing on a filter bus.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

Fig. 2 depicts an example of a controller arrangement 7 for maintaining a balanced filter bus voltage on a filter bus that is fed by at least two voltage source converters, i.e. a power system of the type exemplified in Fig. 1. The controller arrangement 7 is associated with only one voltage source converter and is arranged to control only one voltage source converter.

The controller arrangement 7 comprises a negative sequence voltage controller 9a arranged to control a voltage source converter for reducing or eliminating the negative sequence voltage on the filter bus in the case of an unbalanced load condition. The negative sequence voltage controller 9a may comprise a processor and a memory, which memory comprises computer-executable components which when loaded into the processor is arranged to perform the method(s) of maintaining a balanced filter bus voltage, as will be described herein. Furthermore, the components of the negative sequence voltage controller 9a shown in Fig. 2 may be implemented in software, hardware, or a combination thereof.

The negative sequence voltage controller 9a is arranged to obtain transformed measured voltages and provide control signals for controlling a voltage source converter in a manner which reduces the negative sequence voltages on the filter bus. One or more voltage measurement sensors are arranged to measure the filter bus voltage of each electrical phase and provide the measured filter bus voltages to a transformation unit. The transformation unit is arranged to transform the measured filter bus voltages to orthogonal filter bus voltage vector components of a rotating axis coordinate system, e.g. by means of Dqo transformation or the Park's transformation. The two orthogonal filter bus voltage vector components v_{fx} and v_{fy} thus obtained are filtered by means of a negative sequence filter. In case of the presence of a negative sequence voltage on the filter bus, two orthogonal negative sequence filter bus voltage vector components v_{fxneg} and v_{fyneg} are obtained. Methods for filtering out the orthogonal positive sequence voltage vector components from the orthogonal filter bus voltage vector components to obtain the orthogonal negative sequence voltage vector components are well-known, and will thus not be described any further herein. The transformation unit and the negative sequence filter may be external units to the controller arrangement 7 as shown in Fig. 2, or alternatively one or both may be comprised in the controller arrangement.

Thus, in the case a negative sequence voltage is present on the filter bus, in a step a) the orthogonal negative sequence filter bus voltage vector components v_{fxneg} and v_{fyneg} are obtained by the negative sequence controller 9a after transformation and filtering operations have been executed. As described above, the orthogonal negative sequence filter bus voltage vector components v_{fxneg} and v_{fyneg} provide a measure of the negative sequences voltage present on the filter bus.

Each orthogonal negative sequence filter bus voltage vector component v_{fxneg} and v_{fyneg} is provided to a first adder 11. Each orthogonal negative sequence filter bus voltage vector component v_{fxneg} and v_{fyneg} is subtracted from a filter bus negative sequence voltage reference vector component that is zero, and a scaled orthogonal negative sequence current vector component corresponding to the particular orthogonal negative sequence filter bus voltage vector component is also subtracted by the first adder 11. In other words, each negative sequence voltage reference vector component, which is zero, is hence drooped against the corresponding orthogonal negative sequence current vector component, i.e. transformed output current of the voltage source converter. Each filter bus negative sequence voltage reference vector component is set to zero because it is desired to remove the negative sequence voltage from the filter bus.

The scaling of the orthogonal negative sequence current vector components is by means of a constant number which is a droop coefficient Dₚᵣᵢ. Each orthogonal negative sequence current vector component may be scaled by means of a multiplier 13 which forwards a scaled orthogonal negative sequence current vector component D_{pri*}i_{kxneg}, D_{pri*}i_{kyneg}, where k indicates the kth voltage source converter, to the first adder 11.

In a step b) a respective regulator input signal is thus created as a result of the addition/subtraction by each first adder 11. Each regulator input signal is thus associated with one orthogonal negative sequence filter bus voltage vector component v_{fxneg}, v_{fyneg}.

In a step c) a negative sequence current reference vector component i*_{kxneg_Unlim}, i*_{kyneg_Unlim} is generated for each corresponding orthogonal negative sequence filter bus voltage vector component v_{fxneg} and v_{fyneg}, based on the regulator input signal.

According to one embodiment each negative sequence current reference vector component i*_{kxneg_Unlim}, i*_{kyneg_Unlim} is generated by means of a regulator 15 and a second adder 17. Each regulator 15 creates a current component based on the corresponding first adder 11 output, i.e. the regulator input signal. In particular, the current component from each regulator 15 is summed with a feed forward signal representing a load current. According to this embodiment each negative sequence current vector component may be generated in step c) from this addition in the second adder 17.

In a step d) each negative sequence current reference vector component i*_{kxneg_Unlim}, i*_{kyneg_Unlim} is provided to a negative sequence current reference limiter 19, which may be external or internal to the controller arrangement 7. Limited magnitude negative sequence current reference vector components i*_{kxneg} and i*_{kyneg} may thereby be obtained for controlling a voltage source converter 21 to obtain a balanced filter bus voltage. In particular, the negative sequence current reference vector components i*_{kxneg} and i*_{kyneg} may be used to control the current provided to a filter bus filter 23, e.g. a capacitor bank and the load downstream.

The method is advantageously utilised in a power system which comprises a plurality, i.e. at least two, voltage source converters arranged to supply power to a filter bus via respective inductors, one for each electric phase. Each voltage source converter is associated with a respective controller arrangement 7 which independently from the other control arrangements runs the method presented herein. The droop coefficient may be identical for each corresponding orthogonal negative sequence current vector component of the controller arrangements. A balanced filter bus voltage may thereby be obtained in such a power system, even in the case of an unbalanced load condition.

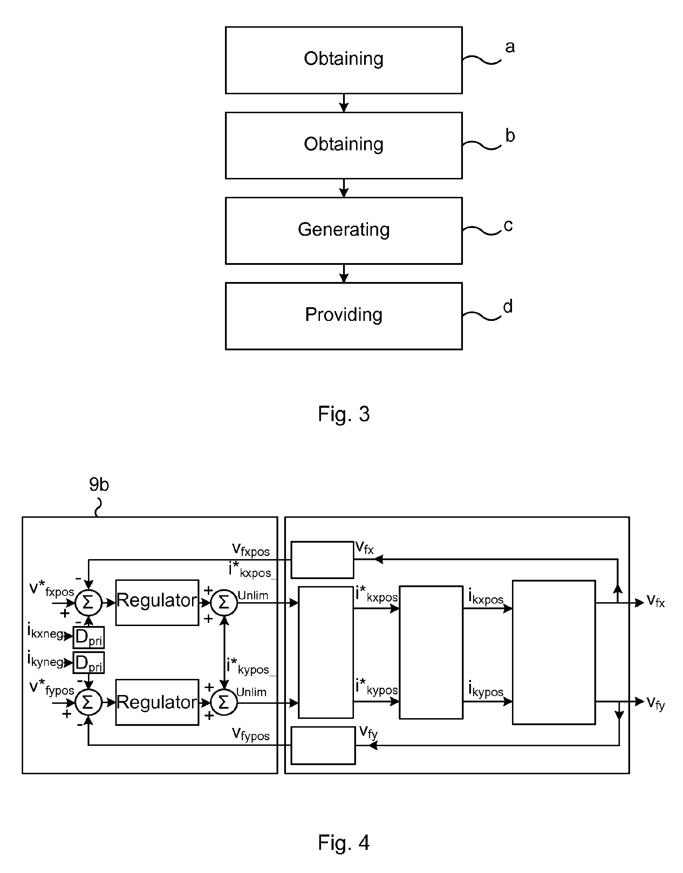

An algorithm for controlling the positive sequence voltage or overall voltage magnitude and the frequency on the filter bus and thus the load sharing between several voltage source converters may advantageously be used in conjunction with the method of maintaining a balanced filter bus voltage. One example of a control scheme for controlling the load sharing when the filter bus voltage is balanced is described in EP2549616. This control scheme is depicted in Fig. 4, with the addition that positive sequence filters separate the orthogonal positive sequence filter bus voltage vector components from the orthogonal negative sequence filter bus voltage vector components, wherein the former is used for the positive sequence voltage control purposes. Each controller arrangement 7 may thus further comprise a positive sequence voltage controller 9b, which is similar to the negative sequence voltage controller 9a, except that is handles only positive sequence voltage components, and the filter bus positive sequence voltage reference vector components are typically non-zero.

Another suitable manner to control load sharing under balanced filter bus voltage conditions, which may be used in conjunction with the method presented herein, is disclosed in the PhD thesis Dynamic Control and Power Management of Converter Fed Microgrids by Charles K. Sao, and the publication Power and Control Management of Converter Fed Microgrids by Charles K. Sao et al.

By combining the control of the negative sequence voltage and the positive sequence voltage or the overall voltage, equitable load sharing may be provided even in the case of an unbalanced load condition. For the purpose of controlling the overall voltage, the controller arrangement may according to one variation comprise a voltage magnitude controller.

The methods presented herein may for example be used in applications where the filter bus has a voltage level in the range 1 kV to 32 kV. However, the utilisation of the method presented herein may be applied also for other voltage levels.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of maintaining a balanced filter bus voltage on a filter bus (4a) that is fed by at least two voltage source converters (2a, 2b, 2c) connected to the filter bus (4a) via respective inductors (3a, 3b, 3c), wherein the method comprises:
a) obtaining orthogonal negative sequence filter bus voltage vector components (v_{fxneg}, v_{fyneg}) which provide a measure of a negative sequence voltage present on the filter bus (4a),
b) obtaining for each orthogonal negative sequence filter bus voltage vector component (v_{fxneg}, v_{fyneg}) a regulator input signal which is a difference between the orthogonal negative sequence filter bus voltage vector component (v_{fxneg}, v_{fyneg}), a filter bus negative sequence voltage reference vector component that is zero, and a scaled orthogonal negative sequence current vector component (Dₚᵣᵢ*iₖₓₙₑg, D_{pri*}i_{kyneg}) corresponding to the orthogonal negative sequence filter bus voltage vector component for which the regulator input signal is to be obtained, wherein the scaling is by means of a droop coefficient,
c) generating for each orthogonal negative sequence filter bus voltage vector component a negative sequence current reference vector component (i*_{kxneg_Unlim}, i*_{kyneg_Unlim}) based on the corresponding regulator input signal, and
d) providing the negative sequence current reference vector components (i*_{kxneg_Unlim}, i*_{kyneg_Unlim}) to a negative sequence current reference limiter to obtain limited magnitude negative sequence current reference vector components for controlling a first of the at least two voltage source converters to obtain a balanced filter bus voltage.

2. The method as claimed in claim 1, wherein in step c) generation of the negative sequence current reference vector components is further based on a feed forward signal representing a load current.

3. The method as claimed in claim 1 or 2, wherein the orthogonal negative sequence filter bus voltage vector components are Dqo transformation components.

4. The method as claimed in any of the preceding claims, wherein each scaled orthogonal negative sequence current vector component is a scaled Dqo transformation component.

5. The method as claimed in any of the preceding claims, comprising controlling a positive sequence voltage on the filter bus when the balanced filter bus voltage has been attained to obtain equitable load sharing.

6. The method as claimed in any of the preceding claims, comprising controlling an overall voltage magnitude on the filter bus when the balanced filter bus voltage has been attained to obtain equitable load sharing.

7. The method as claimed in any of the preceding claims, wherein each step a) to d) is performed independently in each of a plurality of controller arrangements, each controller arrangement being associated with a respective voltage source converter.

8. The method as claimed in claim 7, wherein the droop coefficient is identical for each corresponding orthogonal negative sequence filter bus current vector component of the controller arrangements.

9. A computer program comprising computer-executable components which when run on a processor is arranged to perform the steps according to the method of any of claims 1-8.

10. A controller arrangement (7) for maintaining a balanced filter bus voltage on a filter bus (4a) that is fed by at least two voltage source converters (2a, 2b, 2c) connected to the filter bus via respective inductors (3a, 3b, 3c), wherein the controller arrangement (7) comprises:
a negative sequence voltage controller (9a) arranged to:
obtain orthogonal negative sequence filter bus voltage vector components (v_{fxneg}, v_{fyneg}) which provide a measure of negative sequence voltages present on the filter bus (4a),
obtain for each orthogonal negative sequence filter bus voltage vector component (v_{fxneg}, v_{fyneg}) a regulator input signal which is a difference between the orthogonal negative sequence filter bus voltage vector component (v_{fxneg}, v_{fyneg}), a filter bus negative sequence voltage reference vector component that is zero, and a scaled orthogonal negative sequence current vector component (D_{pri*}i_{kxneg}, D_{pri*}i_{kyneg}) corresponding to the orthogonal negative sequence filter bus voltage vector component for which the regulator input signal is to be obtained, wherein the scaling is a by means of a droop coefficient,
generate for each orthogonal negative sequence filter bus voltage vector component a negative sequence current reference vector component (i*_{kxneg_Unlim}, i*_{kyneg_Unlim}) based on the corresponding regulator input signal,
and
provide the negative sequence current reference vector components (i*_{kxneg_Unlim}, i*_{kyneg_Unlim}) to a negative sequence current reference limiter to obtain limited magnitude negative sequence current reference vector components for controlling a first of the at least two voltage source converters to obtain a balanced filter bus voltage.

11. The controller arrangement (7) as claimed in claim 10, wherein the negative sequence voltage controller (9a) is arranged to generate the negative sequence current reference vector components further based on a feed forward signal representing a load current.

12. The controller arrangement (7) as claimed in claim 10 or 11, wherein the orthogonal negative sequence filter bus voltage vector components are Dqo transformation components.

13. The controller arrangement (7) as claimed in any of claims 10-12, wherein each scaled orthogonal negative sequence current vector component is a scaled Dqo transformation component.

14. The controller arrangement (7) as claimed in any of claims 10-13, comprising a positive sequence voltage controller (9b) arranged to control a positive sequence voltage on the filter bus when the filter bus is subjected to a balanced load condition to obtain equitable load sharing.

15. The controller arrangement (7) as claimed in any of claims 10-14, comprising a voltage magnitude controller arranged to control an overall voltage magnitude on the filter bus when the filter bus is subjected to a balanced load condition to obtain equitable load sharing.
